# EUROPEAN PATENT APPLICATION

(11) **EP 3 893 032 A2**
(43) Date of publication of application: **13.10.2021**
(21) Application number: 21167226.6
(22) Date of filing: 07.04.2021
(51) Int. Cl.: G02B 5/28, G01J 1/04

(54) **OPTICAL FILTER**

(30) Priority: 10.04.2020 US 202063008351 P; 26.03.2021 US 202117213833
(71) Applicant: Viavi Solutions Inc., San Jose, CA 95002 (US)
(72) Inventor: OCKENFUSS, Georg J., San Jose 95002 (US); BOURREAU, Christophe, 92140 Paris (FR); BILGER, Markus, Santa Rosa 95405 (US)
(74) Representative: Murgitroyd & Company

(57) **Abstract**

In some implementations, an optical filter includes a first set of layers configured to pass light associated with a first wavelength range; a second set of layers configured to reflect light associated with at least one subrange of the first wavelength range; and a third set of layers configured to reflect light associated with a second wavelength range. In some implementations, the first wavelength range comprises an upper wavelength cutoff associated with a wavelength threshold, and the second wavelength range comprises a lower wavelength cutoff associated with the wavelength threshold. In some implementations, the optical filter includes a fourth set of layers configured to absorb a particular percentage of light in the first wavelength range.

## Description

### RELATED APPLICATION

This application claims priority to U.S. Provisional Patent Application No. 63/008,351, filed on April 10, 2020, and entitled "COLOR CONTROLLED INFRARED-CUT FILTER," and U.S. Non-Provisional Patent Application No. 17/213,833, filed March 26, 2021, the contents of which are incorporated by reference herein in their entirety.

### BACKGROUND

An optical device may be utilized to capture information concerning light. For example, the optical device may capture information relating to a set of wavelengths associated with the light. The optical device may include a set of sensor elements (e.g., optical sensors, spectral sensors, and/or image sensors) that capture the information. For example, an array of sensor elements may be utilized to capture information relating to multiple wavelengths. The array of sensor elements may be associated with an optical filter. The optical filter may include a passband associated with a first wavelength range of light that is passed to the array of sensor elements. The optical filter may be associated with blocking a second wavelength range of light from being passed to the array of sensor elements.

### SUMMARY

In some implementations, an optical device includes an optical filter configured to: pass light associated with at least one first subrange of a first wavelength range that has an upper bound that is associated with a wavelength threshold, reflect light associated with a second wavelength range that has a lower bound that is associated with the wavelength threshold, and reflect light associated with at least one second subrange of the first wavelength range; and at least one of the following: a glass substrate; an adhesive layer; an array of microlenses; or an antireflective coating.

The wavelength threshold may be between 660 and 670 nanometers, and the at least one second subrange of the first wavelength range may be associated with at least one of a green wavelength range or a blue wavelength range.

The optical filter may comprise a set of absorptive layers that may be configured to: absorb a particular percentage of light that transmits through the set of absorptive layers. The set of absorptive layers may be positioned closer to an input surface of the optical filter than to an output surface of the optical filter.

The optical device may comprise the glass substrate, wherein: the glass substrate may be disposed on an output surface of the optical filter, and wherein a difference between a refractive index associated with the optical filter and a refractive index associated with the glass substrate satisfies a refractive index difference threshold.

The optical device may comprise the adhesive layer, wherein: the adhesive layer may be disposed on an input surface of the optical filter; and the adhesive layer may be configured to attach the input surface of the optical filter to a display screen.

The optical device may comprise the array of microlenses, wherein: the array of microlenses may be disposed over a surface of the optical filter; and the array of microlenses may be configured to alter light that enters or exits the optical filter.

The optical device may comprise the antireflective coating, wherein: the antireflective coating may be disposed on an output surface of the optical filter.

In some implementations, an optical filter includes a first set of layers configured to pass light associated with a first wavelength range; a second set of layers configured to reflect light associated with at least one subrange of the first wavelength range; and a third set of layers configured to reflect light associated with a second wavelength range, wherein: the first wavelength range comprises an upper wavelength cutoff associated with a wavelength threshold, and the second wavelength range comprises a lower wavelength cutoff associated with the wavelength threshold.

The wavelength threshold may be between 660 and 670 nanometers.

The first wavelength range may comprise a visible wavelength range and the second wavelength range may comprise a red wavelength range and an infrared wavelength range.

The at least one subrange of the first wavelength range may be associated with at least one of a green wavelength range or a blue wavelength range.

The optical filter further comprise a fourth set of layers configured to absorb light in the first wavelength range. The fourth set of layers may be positioned closer to an input surface of the optical filter than to an output surface of the optical filter.

In some implementations, an optical filter includes at least one first set of layers configured to: pass light associated with a first wavelength range, and reflect light associated with a second wavelength range; and a second set of layers configured to: absorb a particular percentage of light in the first wavelength range.

A wavelength threshold may be between 660 and 670 nanometers; and the at least one first set of layers may be configured to: pass light associated with a wavelength that is less than the wavelength threshold, and reflect light associated with a wavelength that is greater than or equal to the wavelength threshold.

The at least one first set of layers may be configured to reflect light associated with at least one subrange of the first wavelength range.

The optical filter of claim 15, wherein the second set of layers may be positioned closer to an input surface of the optical filter than to an output surface of the optical filter.

A difference between a refractive index associated with the first set of layers and a refractive index associated with the second set of layers may satisfy a refractive index difference threshold.

The second set of layers may comprise at least one of: tantalum; nickel; copper; aluminum; or niobium.

### BRIEF DESCRIPTION OF THE DRAWINGS

Figs. 1A-1E are diagrams of an example implementation described herein.
Figs. 2A-2C are diagrams of optical characteristics of an example implementation described herein.
Figs. 3A-3C are diagrams of optical characteristics of an example implementation described herein.
Figs. 4A-4C are diagrams of optical characteristics of an example implementation described herein.

### DETAILED DESCRIPTION

The following detailed description of example implementations refers to the accompanying drawings. The same reference numbers in different drawings may identify the same or similar elements. The following description uses a spectrometer as an example. However, the techniques, principles, procedures, and methods described herein may be used with any sensor, including but not limited to other optical sensors and spectral sensors.

A user device, such as a mobile phone, includes a display screen (e.g., on a front surface of the user device) for displaying information to a user of the user device. Often, the user device includes a conventional sensing device (e.g., a fingerprint recognition device, an iris or retina recognition device, a facial recognition device, and/or a spectrometer) to obtain data relating to a user of the user device (e.g., data relating to a fingerprint of the user, an iris or retina of the user, and/or a face of the user, among other examples), such as for an identification and/or authentication application (e.g., to determine whether the user is allowed to interact with the user device). The conventional sensing device may include an optical filter and an optical sensor. For example, the conventional sensing device may include a conventional infrared cut off filter (IR-cut filter) that passes visible light (e.g., that is related to a subject that is to be identified and/or authenticated) to the optical sensor and blocks (or reflects) IR light from reaching the optical sensor.

However, the conventional IR-cut filter may not pass all visible light to the optical sensor. In many cases, the conventional IR-cut filter may reflect red light that falls incident on the conventional IR-cut filter. For example, the conventional IR-cut filter may reflect light associated with a wavelength that is greater than or equal to 640 nanometers (nm) when the light falls incident on the optical filter at a 0 degree incident angle and may reflect light associated with a wavelength that is greater than or equal to 580 nm when the light falls incident on the optical filter at a 50.8 degree incident angle. That is, the conventional IR-cut filter reflects dark red light at low incidence angles and reflects red light at high incidence angles. Further, an intensity of the reflected light may increase when the angle of incidence increases (e.g., light that passes through the conventional IR-cut filter may have an intensity of approximately 4.2 at a 0 degree incident angle and an intensity of approximately 31.8 at a 50.8 degree incident angle). Accordingly, to an observer, the conventional IR-cut filter, when illuminated with broad spectrum (e.g., visible light), appears to have a bright red reflection.

This presents issues when the conventional sensing device (e.g., that includes the conventional IR-cut filter) is positioned behind the display screen of the user device (e.g., to allow the user to present a finger, an eye, and/or a face to the display screen for identification and/or authentication of the user). For example, the conventional IR-cut filter may reflect red light that appears as a red "patch" behind the display screen. This may affect an appearance of visual information on the display screen when the display screen is active and/or may cause the display screen to appear damaged, broken, or otherwise unsightly when the display screen is not active. Further, because of the high intensity of the reflected red light, the IR-cut filter causes the user device to be more noticeable than a user device that does not include a conventional sensing device. This can draw unwanted attention to the user device.

Some implementations described herein provide an optical system that includes an optical filter and optical sensor. The optical filter may be configured to pass light associated with a first wavelength range (e.g., some or all of visible light) and to block and/or reflect light associated with a second wavelength range (e.g., some or all of red light and/or IR light). In some implementations, the optical filter may be configured to pass light that is associated with wavelengths that are less than approximately 660 to 670 nm and to block and/or reflect light that is associated with wavelengths that are greater than or equal to approximately 660 to 670 nm. In this way, the optical filter may be configured to pass red light that would be reflected using a conventional IR-cut optical filter (e.g., red light associated with a wavelength that is greater than or equal to approximately 640 nm and less than approximately 660 to 670 nm). The optical filter may therefore reflect less red light than a conventional IR-cut filter.

In some implementations, the optical filter may be configured to reflect light associated with one or more subranges of the first wavelength range. For example, when the first wavelength range is associated with visible light, the one or more subranges may be associated with a green wavelength range and/or a blue wavelength range. Accordingly, the optical filter may reflect first light associated with the second wavelength range (e.g., red light and/or IR light associated with a wavelength that is greater than or equal to 660 to 670 nm) and second light associated with the one or more subranges of the first wavelength range (e.g., some or all of green light and/or blue light). The first light and the second light may combine (e.g., due to color metamerism) to form combined light that appears, to an observer of the optical filter, to be less red than light that is reflected by a conventional IR-cut filter (e.g., the combined light appears closer to color neutral than the light reflected by the conventional typical IR-cut filter).

In some implementations, the optical filter may include a set of absorptive layers that is configured to absorb a particular percentage (e.g., 20 percent, 40 percent, 60 percent, or 75 percent, among other examples) of light (e.g., visible light) that transmits through the set of absorptive layers. The set of absorptive layers may be positioned at or near an input surface of the optical filter to cause an amount of light (e.g., red light) to be reduced when the light enters and transmits through the set of absorptive layers, and to be further reduced when the light is reflected and transmits through the set of absorptive layers (again) before exiting the optical filter. In this way, an intensity of the reflected light (e.g., reflected red light) is less than that of light that is reflected by a conventional IR-cut filter. Accordingly, the reflected light is less noticeable to an observer of the optical filter.

In some implementations, the optical system that includes the optical filter and the optical sensor described herein may be positioned behind a display screen of a user device. Because the optical filter reflects less red light, combines reflected red light with reflected light associated with other colors, and/or reduces an intensity of reflected red light, the optical filter is less likely to cause a red "patch" to appear behind the display screen than when using a conventional IR-cut filter. This reduces a likelihood that reflected light from the optical filter affects an appearance of visual information on the display screen when the display screen is active and/or that display screen appears damaged, broken, or otherwise unsightly when the display screen is not active. Moreover, this reduces a noticeability of the user device due to light reflected by the optical filter and therefore decreases a likelihood that the user device draws unwanted attention.

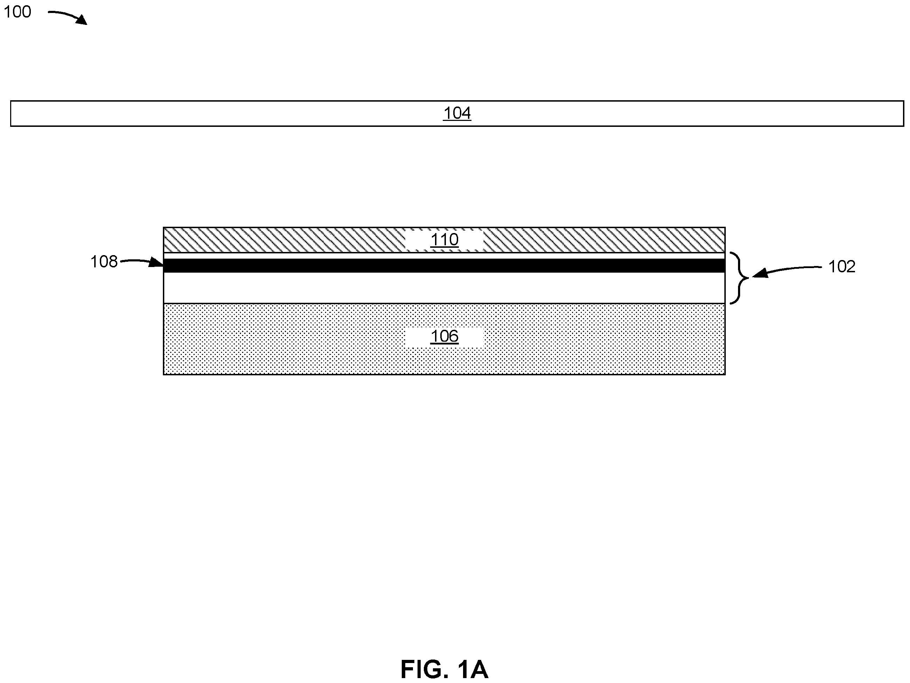

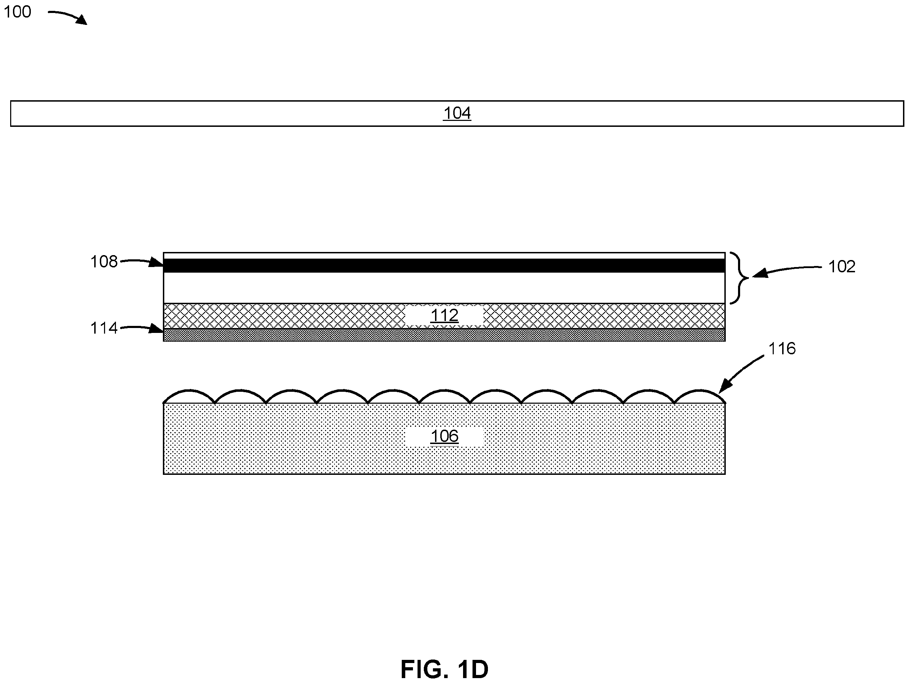

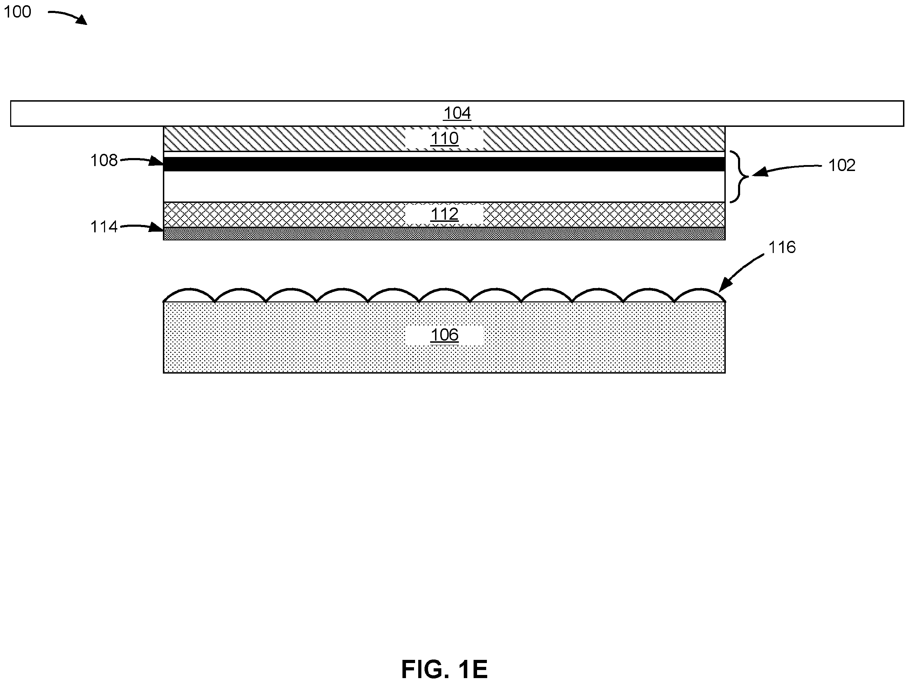

Figs. 1A-1E are diagrams of an overview of an example implementation 100 described herein. As shown in Figs. 1A-1E, example implementation 100 may include an optical filter 102, a display screen 104, and an optical sensor 106. As further shown in Figs. 1A-1E, example implementation 100 may include one or more other components, such as a set of absorptive layers 108, an adhesive layer 110, a substrate 112, a coating 114, and/or an array of microlenses 116.

The optical filter 102 may comprise a plurality of layers that are configured to pass, block, and/or reflect light associated with particular wavelength ranges that enters the optical filter 102 (e.g., via an input surface of the optical filter 102). In some implementations, the optical filter 102 may be a bandpass filter. For example, the optical filter 102 may be configured to pass light associated with a first wavelength range and block and/or reflect light associated with a second wavelength range, as described in more detail herein. Additionally, or alternatively, the optical filter 102 may be a longwave pass (LWP) filter, a shortwave pass (SWP) filter, and/or an infrared cut-off (IR-cut) filter, among other examples.

The display screen 104 may be a liquid crystal display (LCD) display screen, a light emitting diode (LED) display screen, or an organic light emitting diode (OLED) display screen, among other examples. The display screen 104 may include a plurality of pixel components that are configured to emit light (e.g., via a display surface of the display screen 104). In some implementations, the display screen 104 may be configured to allow light to pass through the display screen 104 (e.g., via the one or more pixel components or via spaces between the plurality of pixel components). For example, ambient light may pass through the display screen 104 via the display surface of the display screen 104 and may transmit to the optical filter 102 and/or the optical sensor 106, as further described herein.

The optical sensor 106 may include one or more sensor elements (e.g., an array of sensor elements, also referred to herein as a sensor array), each configured to obtain information. For example, a sensor element may provide an indication of intensity of light that is incident on the sensor element (e.g., active/inactive, or a more granular indication of intensity). As another example, a sensor element may provide an indication of a wavelength or wavelength range of light that is incident on the sensor element (e.g., red light, blue light, green light, ultraviolet light, infrared light, and/or the like). The optical sensor 106 may be configured to collect the information obtained by the one or more sensor elements to generate sensor data regarding light that passes through the optical filter 102 to the optical sensor 106. For example, when the optical filter 102 and the optical sensor 106 are included in an optical system associated with a sensing device, such as a fingerprint recognition device, an iris or retina recognition device, a facial recognition device, an ambient light detection device, and/or a spectrometer, the optical sensor 106 may generate sensor data related to a fingerprint, an iris or retina, a face, ambient light, or other spectral information related to a subject.

In some implementations, the plurality of layers of the optical filter 102 may comprise alternating high refractive index and low refractive index layers. For example, the plurality of layers may include a high refractive index material, such as amorphous silicon (e.g., with a refractive index of 3.78) and/or niobium titanium oxide (e.g., with a refractive index of 2.38). In some implementations, the plurality of layers may include a silicon layer, a silicon dioxide layer, a hydrogenated silicon layer, a tantalum pentoxide layer, a niobium pentoxide layer, a germanium layer, a silicon germanium layer, a hydrogenated silicon germanium layer, a niobium tantalum oxide layer, a titanium dioxide layer, and/or the like. Additionally, or alternatively, the plurality of layers may include another type of high refractive index material layer with a refractive index of greater than 2.0, greater than 2.5, greater than 3.0, and/or greater than 3.5, among other examples. Similarly, the plurality of layers may include a low refractive index material, such as silicon dioxide (e.g., with a refractive index of 1.47). Additionally, or alternatively, the plurality of layers may include another type of low refractive index material layer with a refractive index of less than 2.5, less than 2.0, less than 1.5, and/or less than 1.25, among other examples. In this case, the alternating high refractive index layers and low refractive index layers may have thicknesses sized to achieve an effective refractive index of, for example, greater than 95% of a refractive index of a highest refractive index component material in the optical filter 102.

In some implementations, the optical filter 102 may comprise a first set of layers, of the plurality of layers, configured to pass light associated with a first wavelength range, and a second set of layers, of the plurality of layers, configured to block and/or reflect light associated with a second wavelength range (e.g., where the second wavelength range is different than the first wavelength range). For example, the first set of layers may be configured to pass some or all of visible light (e.g., some or all of red-green-blue (RGB) light that is within the approximate range of 380 to 750 nm) and the second set of layers may be configured to block and/or reflect some or all of red light and/or IR light (e.g., that is within the approximate range of 625 to 1000 nm). Additionally, or alternatively, the first wavelength range may have an upper wavelength cutoff (e.g., an upper bound) associated with a wavelength threshold and the second wavelength range may have a lower wavelength cutoff (e.g., a lower bound) that is associated with the wavelength threshold. Accordingly, the first set of layers may be configured to pass light associated with wavelengths that are less than the wavelength threshold (or within a tolerance of the wavelength threshold) and the second set of layers may be configured to pass light associated with wavelengths that are greater than or equal to the wavelength threshold (or within a tolerance of the wavelength threshold).

In some implementations, the wavelength threshold may be between 660 and 670 nm. Accordingly, the first set of layers may be configured to pass light that is associated with wavelengths that are less than approximately 660 to 670 nm and the second set of layers may be configured to block and/or reflect light that is associated with wavelengths that are greater than or equal to approximately 660 to 670 nm. In this way, the optical filter 102 may be configured to pass red light that would be reflected using a conventional IR-cut optical filter (e.g., red light associated with a wavelength that is greater than or equal to an upper wavelength cutoff of the conventional IR-cut optical filter, approximately 640 nm, and less than the upper wavelength cutoff of the optical filter 102, approximately 660 to 670 nm). The optical filter 102 may therefore reflect less red light than a conventional IR-cut filter.

In some implementations, the optical filter 102 may comprise a third set of layers, of the plurality of layers, configured to reflect light associated with one or more subranges of the first wavelength range. For example, when the first wavelength range is associated with a visible wavelength range, the one or more subranges may be associated with a green wavelength range (e.g., that is within the approximate range of 500 to 565 nm) and/or a blue wavelength range (e.g., that is within the approximate range of 450 to 499 nm). Accordingly, the second set of layers may reflect first light associated with the second wavelength range (e.g., some or all of a red wavelength range and/or an IR wavelength range, as described above) and the third set of layers may reflect second light associated with a green wavelength range and/or a blue wavelength range (e.g., some or all of light associated with a wavelength that is within the approximate range of 450 to 565 nm). The first light and the second light may combine (e.g., due to color metamerism) to form combined light that appears, to an observer of the optical filter 102, less red than the first light. In this way, the optical filter 102 may reflect light that appears less red and closer to color neutral than light reflected by a conventional IR-cut filter.

In some implementations, the plurality of layers of the optical filter 102 may include the set of absorptive layers 108. The set of absorptive layers 108 may be configured to absorb a particular percentage (e.g., a percentage amount of light that satisfies a percentage threshold) of light that transmits through the set of absorptive layers 108. For example, the set of absorptive layers 108 may be configured to absorb approximately 20 percent, 35 percent, 60 percent, or 65 percent of light associated with the first wavelength range (e.g., visible light) and/or the second wavelength range (e.g., red light and/or IR light) that transmits through the set of absorptive layers 108. The set of absorptive layers 108 may include tantalum, nickel, copper, aluminum, niobium, silver, zinc, chromium, hafnium, thallium, silicon, niobium tantalum, silylidyne, germanium, silicon germanium, an oxidized metal, a sub-stoichiometric nitride, and/or any other material that is configured to absorb light.

In some implementations, the set of absorptive layers 108 may be positioned at or near an input surface of the optical filter 102 (e.g., a top surface of the optical filter 102 as shown in Figs. 1A-1E). For example, as shown in Figs. 1A-1E, the set of absorptive layers 108 may be positioned closer to the input surface of the optical filter 102 than to an output surface (e.g., a bottom surface) of the optical filter 102. In this way, light, such as red light that is associated with a wavelength that is greater than or equal to the wavelength threshold, that enters the optical filter 102 (e.g., via the input surface of the optical filter 102) and transmits through the set of absorptive layers 108 may be reduced by the particular percentage. Further, the light, after transmitting through the set of absorptive layers 108, may be reflected by one or more other layers of the optical filter 102 (e.g., one or more of the second set of layers, as described above) and may retransmit through the set of absorptive layers 108 and thereby may be further reduced by the particular percentage before exiting the optical filter 102 (e.g., via the input surface of the optical filter 102). In this way, the optical filter 102 may twice reduce an intensity of light that is reflected by the optical filter 102 (e.g., by causing the light to transmit through the set of absorptive layers 108 two times), which may cause the reflected light (e.g., reflected red light) to be less noticeable to an observer of the optical filter 102.

In some implementations, a refractive index associated with the set of absorptive layers 108 may match (e.g., be the same as or similar to) a refractive index associated with the first set of layers, the second set of layers, and/or the third set of layers (e.g., an effective refractive index associated with the first set of layers, the second set of layers, and/or the third set of layers). For example, a difference between the refractive index associated with the set of absorptive layers 108 and the refractive index associated with the first set of layers, the second set of layers, and/or the third set of layers may satisfy a refractive index difference threshold, such as 5% of the refractive index associated with the set of absorptive layers 108. In this way, the set of absorptive layers 108 may cause a trajectory of light that transmits through the set of absorptive layers to be maintained (e.g., not refracted or otherwise bent) when entering or exiting the set of absorptive layers 108.

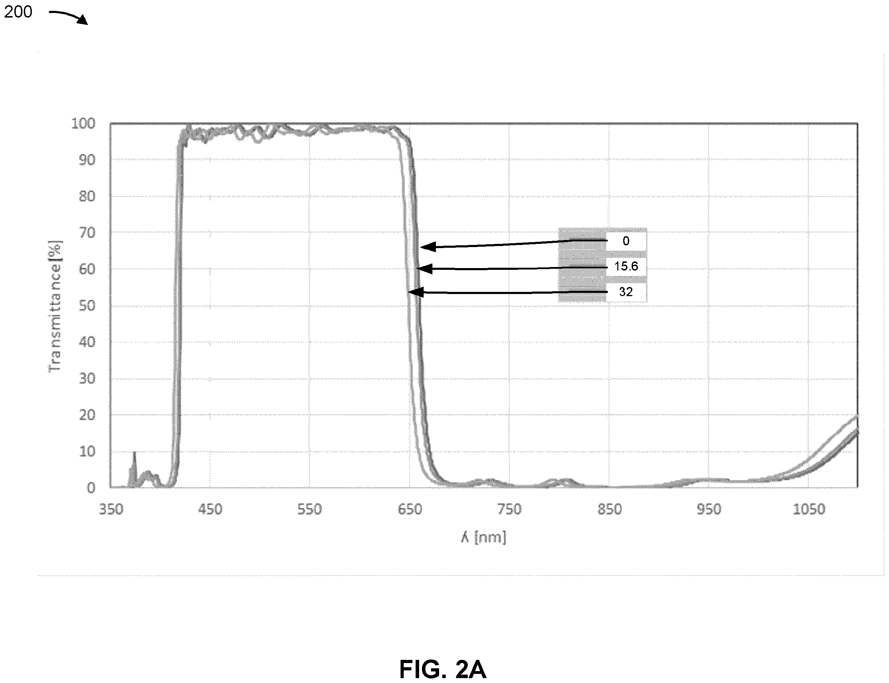

In some implementations, the first set of layers, the second set of layers, the third set of layers, and/or the set of absorptive layers 108 may be different sets of layers. Additionally, or alternatively, the first set of layers, the second set of layers, the third set of layers, and/or the set of absorptive layers 108 may share some or all of the same layers. Further, a performance of the first set of layers, the second set of layers, the third set of layers, and/or the set of absorptive layers 108 may be dependent on an incident angle of light that falls on the optical filter 102. For example, the first set of layers and the third set of layers may pass light associated with particular wavelength ranges, the second set of layers may block and/or reflect light associated with particular wavelength ranges, and/or the set of absorptive layers 108 may absorb a particular percentage of light, as described herein, when the light falls on the optical filter 102 at a 0 degree incident angle (e.g., perpendicular to the input surface of the optical filter 102). Additionally, in some implementations, the first set of layers and the third set of layers may pass light associated with different wavelength ranges, the second set of layers may block and/or reflect light associated with different wavelength ranges, and/or the set of absorptive layers 108 may absorb a different particular percentage of light when the light falls on the optical filter 102 at greater degree incident angles. Further examples of a performance of the optical filter 102 when light falls on the optical filter 102 at different incident angles are describe herein in relation to Figs. 2A-2C, 3A-3C, and 4A-4C.

As shown in Fig. 1A, the optical filter 102 (e.g., that includes the set of absorptive layers 108) may be disposed on the optical sensor 106 (e.g., an output surface of the optical filter 102 may be disposed on an input surface of the optical sensor 106). Accordingly, light that passes through the optical filter 102 may transmit to an input surface of the optical sensor 106 with minimal loss. As further shown in Fig. 1A, the adhesive layer 110 may be disposed on the input surface of the optical filter 102. The adhesive layer 110 may be configured to attach the input surface of the optical filter 102 to the display screen 104 or another component, such as a light guide or light pipe (not shown in Fig. 1A) that is disposed between the optical filter 102 and the display screen 104. The adhesive layer 110 may include an epoxy, such as a transparent epoxy, and/or another adhesive material.

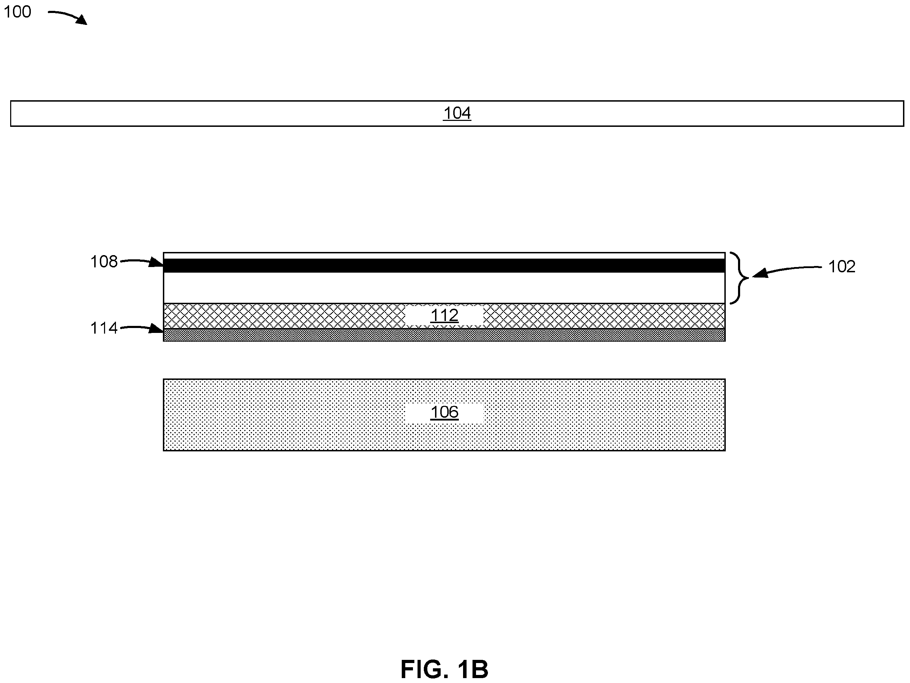

As shown in Fig. 1B, the optical filter 102 may be disposed on a substrate 112 (e.g., an output surface of the optical filter 102 may be disposed on an input surface of the substrate 112). The substrate 112 may be a substrate on which the optical filter 102 was formed. The substrate 112 may be a glass substrate, a silicon substrate, or a germanium substrate, among other examples. In some implementations, a refractive index associated with the substrate 112 may match (e.g., be the same as or similar to) a refractive index associated with the optical filter 102 (e.g., an effective refractive index associated with the plurality of layers of the optical filter 102). For example, a difference between the refractive index associated with the substrate 112 and the refractive index associated with the optical filter 102 may satisfy a refractive index difference threshold, such as 5% of the refractive index associated with the substrate 112. In this way, a trajectory of light that transmits from the optical filter 102 to the substrate 112 may be maintained (e.g., not refracted or otherwise bent) when exiting the optical filter 102 and entering the substrate 112. As further shown in Fig. 1B, the coating 114 may be disposed on the substrate 112 (e.g., on an output surface of the substrate 112). The coating 114 may be, for example, a protective coating and/or an antireflective coating. A protective coating may include a hydrophobic coating, a hydrophilic coating, and/or any other protective coating. An antireflective coating may include a broad band antireflective coating (e.g., that is associated with broad spectrum light, such as visible light), a short wave pass coating that is configured to, for example, transmit visible light and to reflect higher wavelength light (e.g., light associated with a wavelength range of approximately 800 nm to 1100 nm), and/or any other type of antireflective coating.

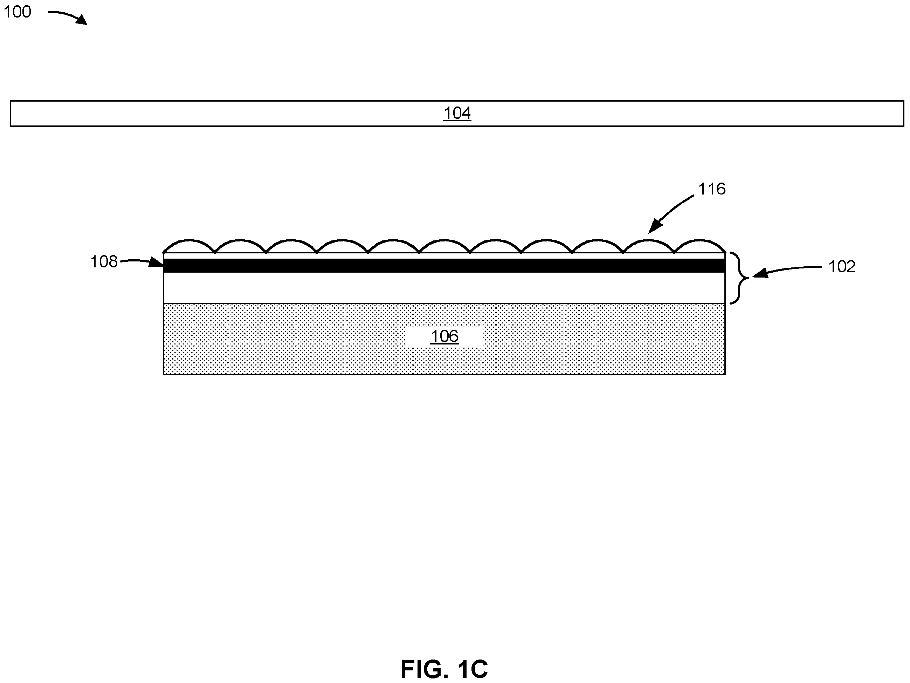

As shown in Fig. 1C, the optical filter 102 (e.g., that comprises the set of absorptive layers 108) may be disposed on the optical sensor 106 (e.g., as described herein in relation to Fig. 1A). As further shown in Fig. 1C, the array of microlenses 116 may be disposed on the optical filter 102 (e.g., the input surface of the optical filter 102). The array of microlenses 116 may be configured to alter (e.g., direct, focus, or collimate, among other examples) beams of light that enter the optical filter 102 (e.g., fall incident on the input surface of the optical filter 102).

As shown in Fig. ID, the optical filter 102 (e.g., that comprises the set of absorptive layers 108) may be disposed on the substrate 112 (e.g., in a similar manner as that described herein in relation to Fig. 1B). As further shown in Fig. ID, the coating 114 may be disposed on the substrate 112 (e.g., in a similar manner as that described herein in relation to Fig. 1B). As further shown in Fig. ID, the array of microlenses 116 may be disposed on the optical sensor 106 (e.g., an input surface of the of the optical sensor 106). Accordingly, the array of microlenses 116 may be configured to alter (e.g., direct, focus, or collimate, among other examples) beams of light that exit the optical filter 102 (e.g., via the output surface of the optical filter 102) and/or enter the optical sensor 106 (e.g., fall incident on the input surface of the optical sensor 106).

As shown in Fig. IE, the optical filter 102 (e.g., that comprises the set of absorptive layers 108) may be disposed on the substrate 112 (e.g., in a similar manner as that described herein in relation to Figs. 1B and ID); the coating 114 may be disposed on the substrate 112 (e.g., in a similar manner as that described herein in relation to Figs. 1B and ID); and the array of microlenses 116 may disposed on the optical sensor 106 (e.g., in a similar manner as that described herein in relation to Fig. ID). As further shown in Fig. IE, the adhesive layer 110 may be disposed on the optical filter 102 (e.g., in a similar manner as that described herein in relation to Fig. 1A) and on the display screen 104 (e.g., a non-display surface of the display screen 104). The adhesive layer 110 may be configured to attach the input surface of the optical filter 102 to the non-display surface of the display screen 104. The adhesive layer 110 may be index matched to the substrate 112.

As indicated above, Figs. 1A-1E are provided merely as an example. Other examples may differ from what is described with regard to Figs. 1A-1E.

Figs. 2A-2C are diagrams 200 of optical characteristics of an example implementation described herein. In the example implementation, an optical filter 102 may include a first set of layers that are configured to pass light associated with a first wavelength range and a second set of layers configured to reflect light associated with a second wavelength range. An upper wavelength cutoff of the first wavelength range may be approximately 660 nm and a lower wavelength cutoff of the second wavelength range may be approximately 660 nm.

Fig. 2A shows a transmittance performance of the optical filter 102 (e.g., a percentage amount of light that is passed by the optical filter 102) when light falls on the optical filter 102 at different incident angles. As shown in Fig. 2A, the optical filter 102 may transmit over 90 percent of light associated with a wavelength range between approximately 420-660 nm that falls on the optical filter 102 at a 0 degree incident angle, may transmit over 90 percent of light associated with a wavelength range between approximately 420-655 nm that falls on the optical filter 102 at a 15.6 degree incident angle, and may transmit over 90 percent of light associated with a wavelength range between approximately 420-650 nm that falls on the optical filter 102 at a 32 degree incident angle.

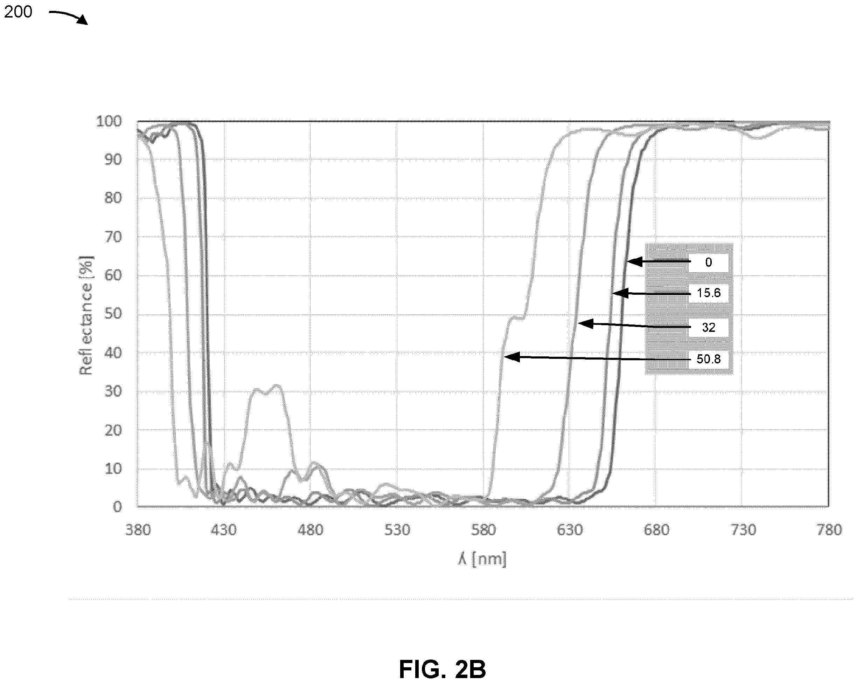

Fig. 2B shows a reflectance performance of the optical filter 102 (e.g., a percentage amount of light that is reflected by the optical filter 102) when light falls on the optical filter 102 at different incident angles. As shown in Fig. 2B, the optical filter 102 may reflect a majority of light associated with a wavelength that is greater than or equal to approximately 660 nm that falls on the optical filter 102 at a 0 degree incident angle, may reflect a majority of light associated with a wavelength that is greater than or equal to approximately 655 nm that falls on the optical filter 102 at a 15.6 degree incident angle, may reflect a majority of light associated with a wavelength range that is greater than or equal to approximately 635 nm that falls on the optical filter 102 at a 32 degree incident angle, and may reflect a majority of light associated with a wavelength range that is greater than or equal to approximately 600 nm that falls on the optical filter 102 at a 50.8 degree incident angle.

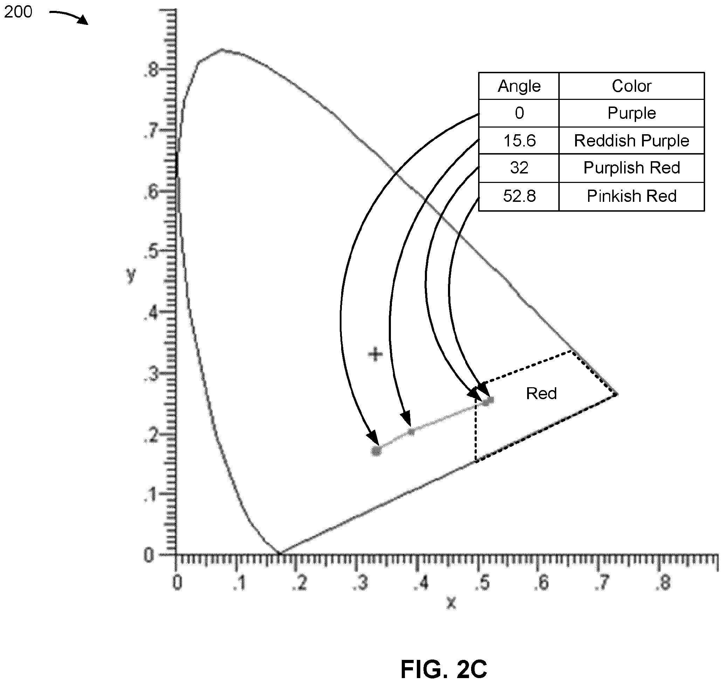

Fig. 2C shows a Commission Internationale de L'eclairage (CIE) chromaticity plot indicating a color appearance of light reflected by the optical filter 102 when broad spectrum light (e.g., visible light) falls on the optical filter 102 at different incident angles. In the CIE chromaticity plot the plus (+) symbol indicates neutral color. As shown in Fig. 2C, the optical filter 102 may reflect purple light when broad spectrum light falls on the optical filter 102 at a 0 degree incident angle, may reflect reddish purplish light when broad spectrum light falls on the optical filter 102 at a 15.6 degree incident angle, may reflect purplish red light when broad spectrum light falls on the optical filter 102 at a 32 degree incident angle, and may reflect pinkish red light when broad spectrum light falls on the optical filter 102 at a 52.8 degree incident angle. In this way, the optical filter 102 reflects less red light than a conventional IR-cut filter (e.g., that reflects dark red light to light red light).

As indicated above, Figs. 2A-2C are provided merely as an example. Other examples may differ from what is described with regard to Figs. 2A-2C.

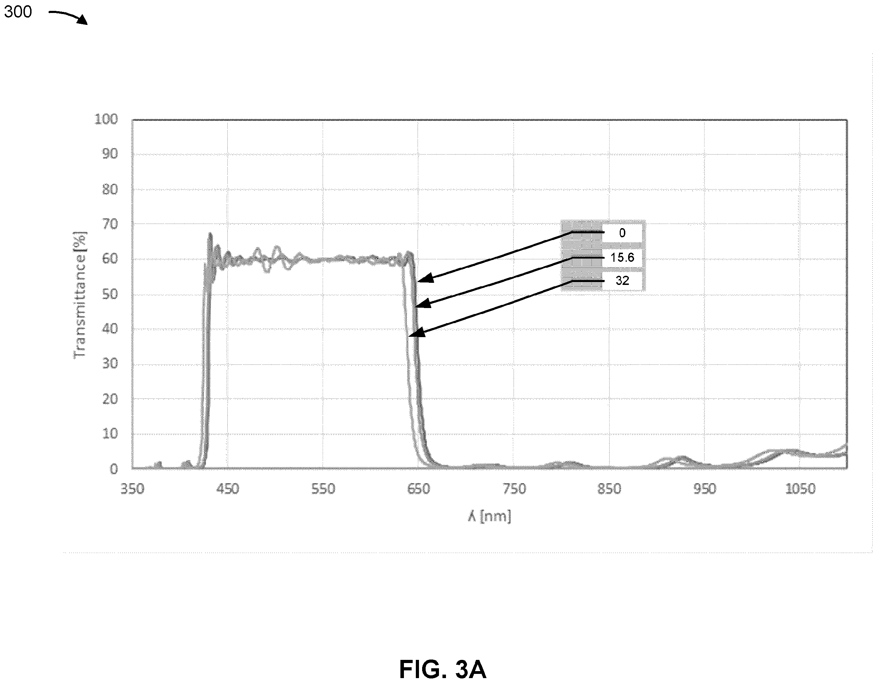

Figs. 3A-3C are diagrams 300 of optical characteristics of an example implementation described herein. In the example implementation, an optical filter 102 may include a first set of layers that are configured to pass light associated with a first wavelength range and a second set of layers configured to reflect light associated with a second wavelength range. An upper wavelength cutoff of the first wavelength range may be approximately 645 nm and a lower wavelength cutoff of the second wavelength range may be approximately 645 nm. The optical filter 102 may further include a set of absorptive layers 108 (e.g., a 7 nm thick set of absorptive layers 108) that comprises tantalum. The set of absorptive layers 108 may be configured to absorb 40% of light (e.g., visible light) that transmits through the set of absorptive layers 108.

Fig. 3A shows a transmittance performance of the optical filter 102 (e.g., a percentage amount of light that is passed by the optical filter 102) when light falls on the optical filter 102 at different incident angles. As shown in Fig. 3A, the optical filter 102 may transmit a majority of light associated with a wavelength range between approximately 435-647 nm that falls on the optical filter 102 at a 0 degree incident angle, may transmit a majority of light associated with a wavelength range between approximately 435-645 nm that falls on the optical filter 102 at a 15.6 degree incident angle, and may transmit a majority of light associated with a wavelength range between approximately 430-640 nm that falls on the optical filter 102 at a 32 degree incident angle.

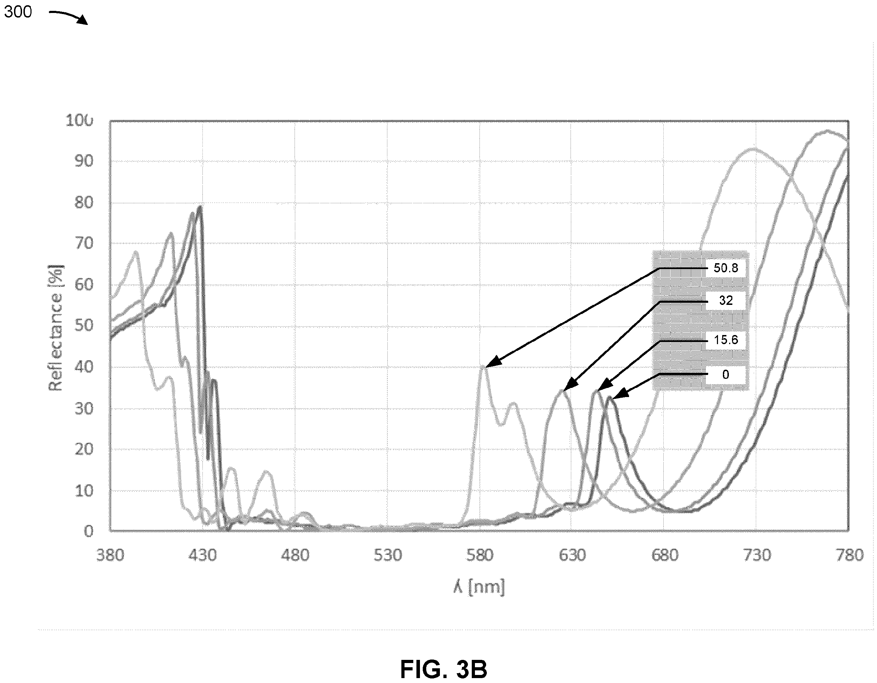

Fig. 3B shows a reflectance performance of the optical filter 102 (e.g., a percentage amount of light that is reflected by the optical filter 102) when light falls on the optical filter 102 at different incident angles. As shown in Fig. 3B, the optical filter 102 may have a reflectance peak of approximately 32% for light associated with a wavelength that is approximately 650 nm and that falls on the optical filter 102 at a 0 degree incident angle, may have a reflectance peak of approximately 34% for light associated with a wavelength that is approximately 645 nm and that falls on the optical filter 102 at a 15.6 degree incident angle, may have a reflectance peak of approximately 34% for light associated with a wavelength that is approximately 627 nm and that falls on the optical filter 102 at a 32 degree incident angle, and may have a reflectance peak of approximately 40% for light associated with a wavelength that is approximately 583 nm and that falls on the optical filter 102 at a 50.8 degree incident angle.

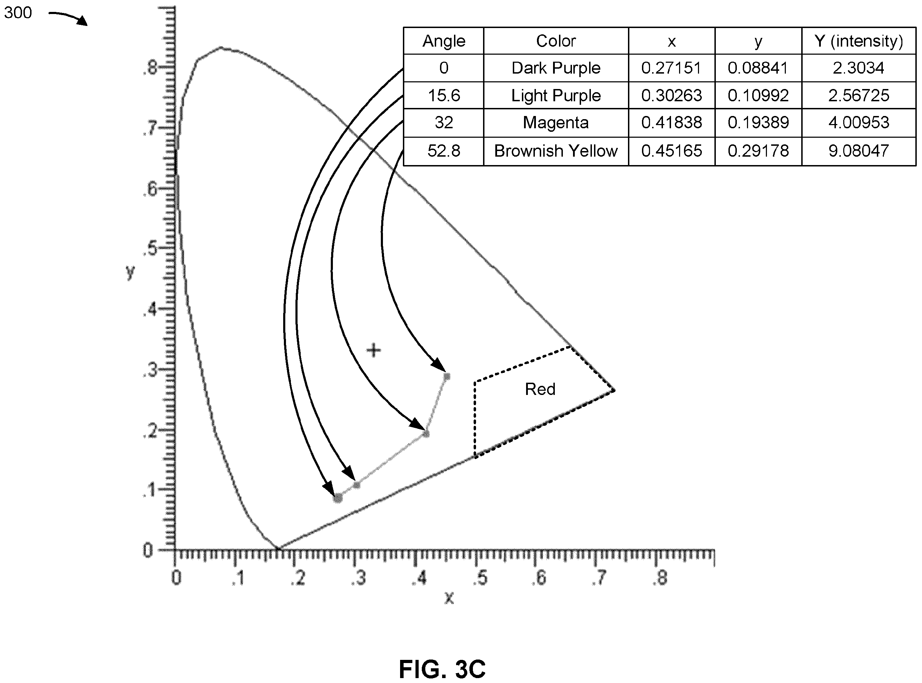

Fig. 3C shows a CIE chromaticity plot indicating a color appearance of light reflected by the optical filter 102 when broad spectrum light (e.g., visible light) falls on the optical filter 102 at different incident angles. In the CIE chromaticity plot the plus (+) symbol indicates neutral color. As shown in Fig. 3C, the optical filter 102 may reflect a dark purple light when broad spectrum light falls on the optical filter 102 at a 0 degree incident angle (e.g., a plot point where x = 0.27151 and y = 0.08841), may reflect a light purple light when broad spectrum light falls on the optical filter 102 at a 15.6 degree incident angle (e.g., a plot point where x = 0.30263 and y = 0.10992), may reflect a magenta light when broad spectrum light falls on the optical filter 102 at a 32 degree incident angle (e.g., a plot point where x = 0.41838 and y = 0.19389), and may reflect a brownish yellow light when broad spectrum light falls on the optical filter 102 at a 52.8 degree incident angle (e.g., a plot point where x = 0.45165 and y = 0.029178). In this way, the optical filter 102 reflects less red light than a conventional IR-cut filter (e.g., that reflects dark red light and light red light).

As further shown in Fig. 3C, the reflected dark purple light associated with the 0 degree incident angle may have an intensity of 2.3034, the reflected light purple light associated with the 15.6 degree incident angle may have an intensity of 2.56725, the reflected magenta light associated with the 32 degree incident angle may have an intensity of 4.00953, and the reflected brownish yellow light associated with the 52.8 degree incident angle may have an intensity of 9.08047. In this way, the optical filter 102 reflects less intense light than a conventional IR-cut filter (e.g., that can reflect light with an intensity as high as 31.84345).

As indicated above, Figs. 3A-3C are provided merely as an example. Other examples may differ from what is described with regard to Figs. 3A-3C.

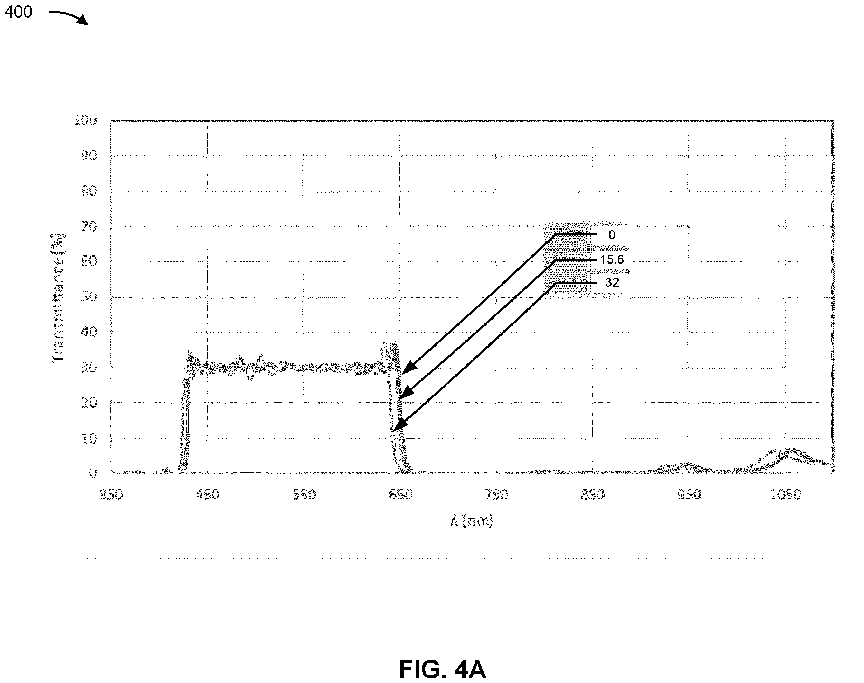

Figs. 4A-4C are diagrams 400 of optical characteristics of an example implementation described herein. In the example implementation, an optical filter 102 may include a first set of layers that are configured to pass light associated with a first wavelength range and a second set of layers configured to reflect light associated with a second wavelength range. An upper wavelength cutoff of the first wavelength range may be approximately 650 nm and a lower wavelength cutoff of the second wavelength range may be approximately 650 nm. The optical filter 102 may further include a set of absorptive layers 108 (e.g., a 12.6 nm thick set of absorptive layers 108) that comprises tantalum. The set of absorptive layers 108 may be configured to absorb 70% of light (e.g., visible light) that transmits through the set of absorptive layers 108.

Fig. 4A shows a transmittance performance of the optical filter 102 (e.g., a percentage amount of light that is passed by the optical filter 102) when light falls on the optical filter 102 at different incident angles. As shown in Fig. 4A, the optical filter 102 may transmit approximately 30 percent of light that is associated with a wavelength range between approximately 435-650 nm that falls on the optical filter 102 at a 0 degree incident angle, may transmit approximately 30 percent of light that is associated with a wavelength range between approximately 435-650 nm that falls on the optical filter 102 at a 15.6 degree incident angle, and may transmit approximately 30 percent of light that is associated with a wavelength range between approximately 430-640 nm that falls on the optical filter 102 at a 32 degree incident angle.

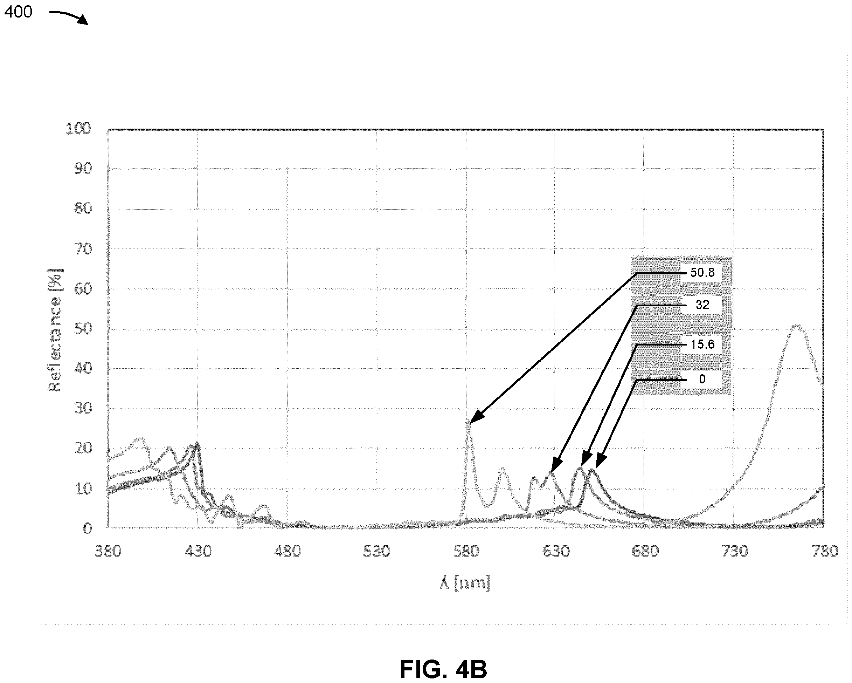

Fig. 4B shows a reflectance performance of the optical filter 102 (e.g., a percentage amount of light that is reflected by the optical filter 102) when light falls on the optical filter 102 at different incident angles. As shown in Fig. 4B, the optical filter 102 may have a reflectance peak of approximately 15% for light associated with a wavelength that is approximately 650 nm and that falls on the optical filter 102 at a 0 degree incident angle, may have a reflectance peak of approximately 16% for light associated with a wavelength that is approximately 645 nm and that falls on the optical filter 102 at a 15.6 degree incident angle, may have a reflectance peak of approximately 13% for light associated with a wavelength that is approximately 628 nm and that falls on the optical filter 102 at a 32 degree incident angle, and may have a reflectance peak of approximately 27% for light associated with a wavelength that is approximately 581 nm and that falls on the optical filter 102 at a 50.8 degree incident angle.

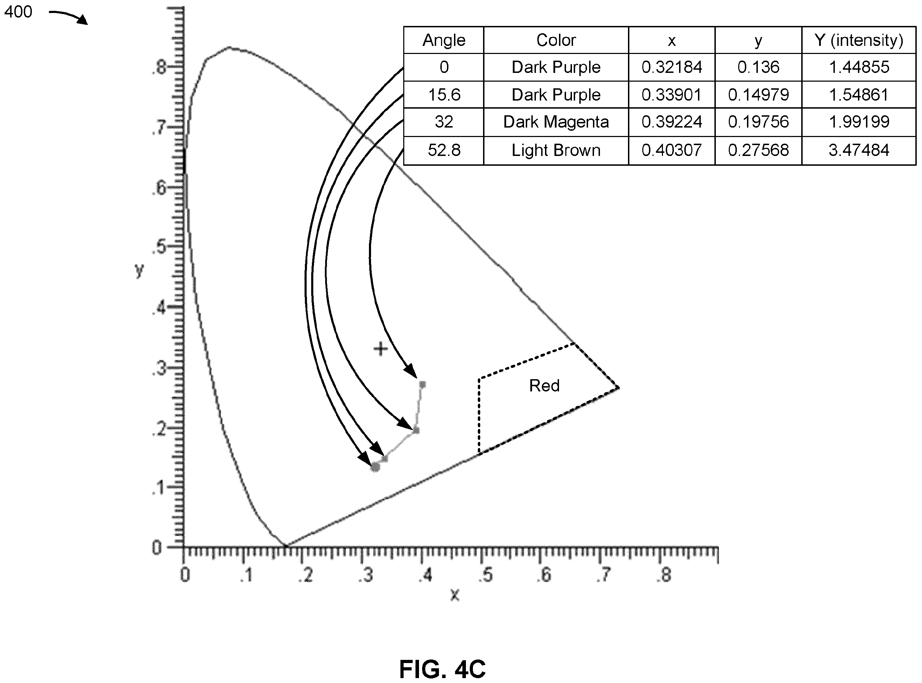

Fig. 4C shows a CIE chromaticity plot indicating a color appearance of light reflected by the optical filter 102 when broad spectrum light (e.g., visible light) falls on the optical filter 102 at different incident angles. In the CIE chromaticity plot the plus (+) symbol indicates neutral color. As shown in Fig. 4C, the optical filter 102 may reflect a first dark purple light when broad spectrum light falls on the optical filter 102 at a 0 degree incident angle (e.g., a plot point where x = 0.32184 and y = 0.136), may reflect a second dark purple light when broad spectrum light falls on the optical filter 102 at a 15.6 degree incident angle (e.g., a plot point where x = 0.33901 and y = 0.14979), may reflect a dark magenta light when broad spectrum light falls on the optical filter 102 at a 32 degree incident angle (e.g., a plot point where x = 0.39224 and y = 0.19756), and reflect a light brown light when broad spectrum light falls on the optical filter 102 at a 52.8 degree incident angle (e.g., a plot point where x = 0.40307 and y = 0.27568). In this way, the optical filter 102 reflects less red light than a conventional IR-cut filter (e.g., that reflects dark red light and light red light).

As further shown in Fig. 4C, the reflected dark purple light associated with the 0 degree incident angle may have an intensity of 1.44855, the reflected light purple light associated with the 15.6 degree incident angle may have an intensity of 1.54861, the reflected magenta light associated with the 32 degree incident angle may have an intensity of 1.99199, and the reflected brownish yellow light associated with the 52.8 degree incident angle may have an intensity of 3.47484. In this way, the optical filter 102 reflects less intense light than a conventional IR-cut filter (e.g., that can reflect light with an intensity as high as 31.84345).

As indicated above, Figs. 4A-4C are provided merely as an example. Other examples may differ from what is described with regard to Figs. 4A-4C.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. An optical device, comprising:
an optical filter configured to:
pass light associated with at least one first subrange of a first wavelength range that has an upper bound that is associated with a wavelength threshold,
reflect light associated with a second wavelength range that has a lower bound that is associated with the wavelength threshold, and
reflect light associated with at least one second subrange of the first wavelength range; and
at least one of the following:
a glass substrate,
an adhesive layer,
an array of microlenses, or
an antireflective coating.

2. The optical device of claim 1, wherein:
the wavelength threshold is between 660 and 670 nanometers, and
the at least one second subrange of the first wavelength range is associated with at least one of a green wavelength range or a blue wavelength range.

3. The optical device of claim 1, wherein the optical filter comprises a set of absorptive layers that is configured to:
absorb a particular percentage of light that transmits through the set of absorptive layers.

4. The optical device of claim 3, wherein the set of absorptive layers are positioned closer to an input surface of the optical filter than to an output surface of the optical filter.

5. The optical device of claim 1, wherein the optical device comprises the glass substrate, wherein:
the glass substrate is disposed on an output surface of the optical filter, and
wherein a difference between a refractive index associated with the optical filter and a refractive index associated with the glass substrate satisfies a refractive index difference threshold.

6. The optical device of claim 1, wherein the optical device comprises the adhesive layer, wherein:
the adhesive layer is disposed on an input surface of the optical filter; and
the adhesive layer is configured to attach the input surface of the optical filter to a display screen.

7. The optical device of claim 1, wherein the optical device comprises the array of microlenses, wherein:
the array of microlenses is disposed over a surface of the optical filter; and
the array of microlenses is configured to alter light that enters or exits the optical filter.

8. The optical device of claim 1, wherein the optical device comprises the antireflective coating, wherein:
the antireflective coating is disposed on an output surface of the optical filter.

9. An optical filter, comprising:
a first set of layers configured to pass light associated with a first wavelength range;
a second set of layers configured to reflect light associated with at least one subrange of the first wavelength range; and
a third set of layers configured to reflect light associated with a second wavelength range, wherein:
the first wavelength range comprises an upper wavelength cutoff associated with a wavelength threshold, and
the second wavelength range comprises a lower wavelength cutoff associated with the wavelength threshold.

10. The optical filter of claim 9, wherein the wavelength threshold is between 660 and 670 nanometers.

11. The optical filter of claim 9, wherein the first wavelength range comprises a visible wavelength range and the second wavelength range comprises a red wavelength range and an infrared wavelength range.

12. The optical filter of claim 9, wherein the at least one subrange of the first wavelength range is associated with at least one of a green wavelength range or a blue wavelength range.

13. The optical filter of claim 9, further comprising a fourth set of layers configured to absorb light in the first wavelength range.

14. The optical filter of claim 13, wherein the fourth set of layers are positioned closer to an input surface of the optical filter than to an output surface of the optical filter.

15. An optical filter, comprising:
at least one first set of layers configured to:
pass light associated with a first wavelength range, and
reflect light associated with a second wavelength range; and
a second set of layers configured to:
absorb a particular percentage of light in the first wavelength range.
